# EUROPEAN PATENT SPECIFICATION

(11) **EP 3 272 542 B1**
(45) Date of publication and mention of the grant of the patent: **27.03.2019**
(21) Application number: 17180457.8
(22) Date of filing: 10.07.2017
(51) Int. Cl.: B41J 3/407, B29C 67/00, B33Y 80/00, B29C 64/40, B29C 64/112

(54) **METHOD OF PRINTING ON A THREE-DIMENSIONAL OBJECT**
VERFAHREN ZUM DRUCKEN AUF EINEM DREIDIMENSIONALEN OBJEKT
PROCÉDÉ D'IMPRESSION SUR UN OBJET TRIDIMENSIONNEL

(30) Priority: 19.07.2016 EP 16180095
(43) Date of publication of application: 24.01.2018
(73) Proprietor: OCE Holding B.V., 5914 CA Venlo (NL)
(72) Inventor: DEL-AGUILA, Arlette, 5914 CA Venlo (NL); LEYNADIER, Christophe A., 5914 CA Venlo (NL)
(74) Representative: OCE IP Department

(56) References cited:
- EP-A1- 2 471 606
- EP-A1- 3 090 877
- EP-A1- 3 162 577
- EP-A2- 2 447 045
- WO-A1-2011/162071
- CN-B- 103 144 445

## Description

The invention relates to a method of printing on a surface of a three-dimensional object with a printer having a print surface and a print head, wherein a jig is used for positioning the object on the print surface in a position in which the surface to be printed on faces the print head.

In this specification, the term "three-dimensional object" shall designate any physical object that is extended in three dimensions, including plate-like objects with a relief surface, which objects are sometimes also termed 2.5-dimensional objects.

What is being printed on the surface of the three-dimensional object is usually an image. The three-dimensional object already has a specific three-dimensional shape. In such cases it might suffice that the image is a two-dimensional image of coloured pixels or shapes. However, the image might as well include a relief, wherein the pixels or shapes in the image not only have a colour, but also a height above a reference surface (usually the surface being printed on). In an extreme case, the pixels or shapes in the image all have the same colour and the image merely defines a relief. Relief images are typically printed by printing multiple layers of ink on top of each other. For the sake of brevity, in the remainder of this document, the term image will refer to image in the broad scope as described above, i.e. it may refer to a two-dimensional image, or to a relief image in one or more colours.

While the image receiving surface, i.e. the surface of the object on which an image is to be printed, should be approximately flat in order for the print head to be able to deposit a marking material such as ink on that surface with sufficient accuracy, the surface of the object on the side opposite to the image receiving surface may be non-parallel with the image receiving surface and may not even be flat. In such cases, it is difficult to stably align and accurately position the object on the print surface in a position and posture suitable for forming the image as intended. It is therefore known to place the object into or onto one or more jigs which have shapes suitable for stably supporting the object on the print surface. When the printer is a flat bed printer wherein the print surface is formed by a perforated suction plate, a flat bottom side of the jig may also be used for securely holding the jig and, therewith, the object on the suction plate.

The European patent EP 3 090 877 B1 by the present proprietor discloses a method of forming substrate alignment tabs on a print surface of a printer having an ink jet print head that is capable of relief printing, characterized in that the print head is used for printing the tabs directly onto the print surface. EP3162577 A1 shows a method to inkjet print a supportive element. EP2471606 A1 and WO2011/162071 A1 show methods of inkjet printing on three dimensional objects using a jig.

However, providing the jigs with suitable shapes and accurately positioning them on the print surface frequently turns out to be a cumbersome task. It is therefore an object of the invention to facilitate this process and to permit an improved position accuracy in printing an image on the image receiving surface.

In order to achieve this object, the method according to the invention comprises the steps of:
- providing a three-dimensional digital model of the jig;
- using the printer for printing the jig on the print surface; and
- placing the object against the jig.
Thus, according to the invention, the printer that is used for forming the image on the object is also used for forming the jig or jigs by means of a 3D (or 2.5D) printing technique. This has the advantage that not only the shape but also the position of the jig on the print surface can already be determined in the process of printing the jig, so that, since the jig determines the position of the object to be printed on, the information on the exact position of the image receiving surface of the object is readily available in the printer control software when the image is to be printed. As a consequence, not only the process of providing a jig with the correct shape but also the process of correctly positioning the jig on the print surface is greatly facilitated.
Useful optional details of the invention are indicated in the dependent claims.
In a preferred embodiment, the printer is an ink jet printer. The same print head or print heads may be used for printing the jig and for forming the image on the object. In another embodiment, different print heads may be used for these purposes, but the print heads may be provided on a common carriage which is arranged to scan the print surface.

As the jigs require some rigidity, an ink is preferred that forms rigid structures when dried or cured. Therefore, radiation curable inks, such as UV curable inks, are suitable for forming jigs.

In addition to the information on the shape of the jig, information on the shape of the object should be available at least to the extent that the height of the image receiving surface relative to the print surface can be determined for appropriately adjusting the height of the print head.

Frequently, a three-dimensional model of the object to be printed on will be available or can be obtained by means of a 3D-scanner. In that case, the control software of the printer may be configured such that three-dimensional models of suitable jigs are calculated automatically from the three-dimensional model of the object.

When the print surface of the printer is a suction plate, a sheet-like substrate may be placed onto the suction plate, and the jig or jigs may be printed onto that sheet. Then, the suction plate is preferably kept active for immobilizing the substrate while the object or objects are placed on the jigs.

In another embodiment, the jig may be printed directly onto the print surface of the printer. In that case, the ink that is used for forming the jig should preferably have a consistency that permits to easily remove the jig from the print surface when the images on the objects have been formed and the printer shall be used for a different task. As an alternative, a special print head may be provided for printing a primer layer onto the print surface in those positions in which the jigs will then be formed on the primer layer. In that case, only the ink that is used for the primer layer needs to have a consistency that permits to easily remove the primer from the print surface.

In a further embodiment for printing an image on the image receiving surface of the object, the height of the image receiving surface relative to the print surface of the printer is automatically based on the three-dimensional model of the object and, if relevant, the three-dimensional digital model of the jig. The height of the print head is automatically adjusted based on the determined height of the image receiving surface. If the object has on an opposite side a surface substantially parallel to the image receiving surface, the jig only serves to fix the position of the object and consequently does not contribute to the height of image receiving surface. As only the object contributes to this height in this case, only the three-dimensional model is needed to determine the height of the image receiving surface and subsequently the height of the print head.

Embodiment examples will now be described in conjunction with the drawings, wherein:
- Fig. 1: is a schematic sectional view of a flat bed ink jet printer while being used for printing onto an object in accordance with the method according to the invention;
- Fig. 2: shows the printer of Fig. 1 in a condition ready for practicing the method according to the invention;
- Fig. 3: shows the printer of Figs. 1 and 2 in an intermediate state while practicing the invention;
- Fig. 4: illustrates another embodiment example of the method according to the invention;
- Figs. 5 and 6: illustrate other embodiment examples to be performed with another type of printer;
- Fig. 7: is a cross-sectional view of a jig and an object to be printed on; and
- Fig. 8: shows the jig and the object of Fig. 7 in a longitudinal section along the line VIII-VIII in Fig. 7.

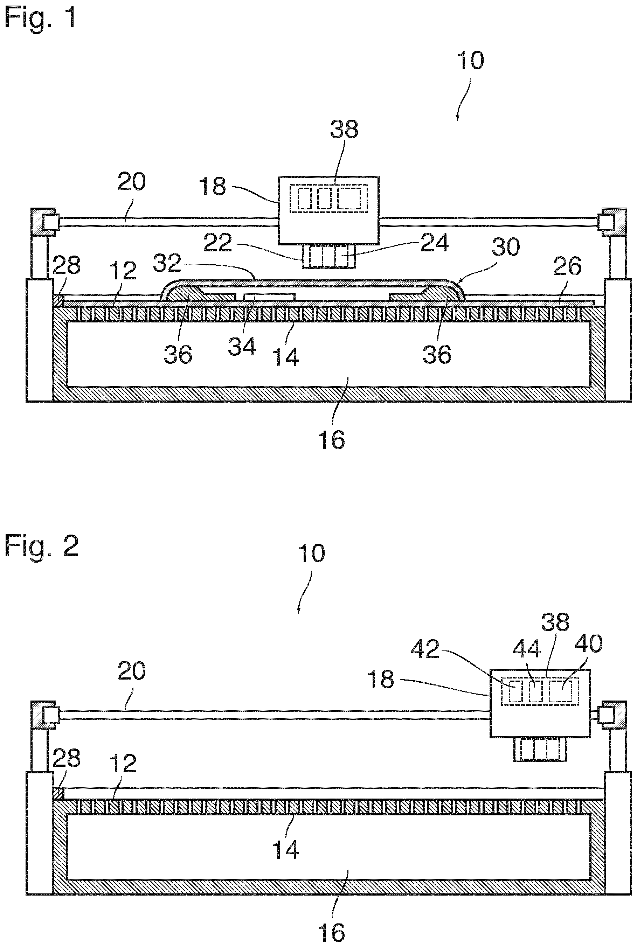

Fig. 1 shows a flat bed ink jet printer having a print surface 12 constituted by a perforated suction plate 14 that forms the top surface of a suction chamber 16. A carriage 18 is guided along guide rails 20 so as to be movable across the print surface 12 in a main scanning direction. The guide rails 20 form part of a height-adjustable gantry that is movable in a sub-scanning direction, normal to the plane of the drawing in Fig. 1.

A print head assembly 22 is provided on the bottom side of the carriage 18 and comprises a plurality of print heads 24 arranged for printing with different inks and facing the print surface 12.

A sheet-like substrate 26 has been placed onto the print surface 12 such that two adjacent edges of the substrate 26 are aligned at two orthogonal alignment ledgers 28. Note that aligning the sheet-like substrate 26 to the alignment ledgers is only necessary if it is intended to remove the sheet-like substrate 26 after use and reuse it with the printed jigs 36 at a later time again.

In this example, an object 30 to be printed on is constituted by a smartphone cover that has been placed on the substrate 26 with a concave side facing downwards. A flat top side of the object 30 constitutes an image receiving surface 32 on which an image is to be formed with the print heads 24.

Since the concave side of the object 30 is facing the suction plate 14, it would not have been possible to immobilize the object by placing it directly on the print surface 12, because the object 30 does not close-off a substantial number of perforations of the suction plate, and ambient air could enter into the cavity of the smartphone cover through openings 34 in the edges thereof, so that no suction pressure could be built-up to hold the object.

For this reason, in order to securely hold the object 30 in position on the substrate 26, two jigs 36 have been fixed on the substrate 26 inside the cavity of the object 30 so as to engage two opposite edges of this object from inside. The jigs 36 have external contours that are complementary to the contour of the cavity in the object 30, so that the object is safely held in position. Further, the jigs have extensions that provide a large bottom surface area for adhesion on the substrate 26.

In the condition shown in Fig. 1, the printer is ready for forming an image on the image receiving surface 32 of the object. To that end, the gantry with the guide rails 20 will be lowered into a position in which the nozzle faces of the print heads 24 form only a narrow gap with the image receiving surface 32, and then the carriage 18 will scan the print surface in order to print the image in a specified position. The operations of the print heads and the movements of the carriage 18 are controlled by an electronic controller 38.

Fig. 2 shows the printer 10 without the substrate 26, the jigs 36 and the object 30. The controller 38 includes a digital processor 40, a memory 42 for storing data that specify the shape of the object 30, and another memory 44 for storing a three-dimensional model of the jigs 36.

In this example, it shall be assumed that the memory 42 stores a three-dimensional model of the object 30, and the processor 40 is programmed to calculate, from that model, the three-dimensional model of the jigs 36 specifying the shapes of the jigs 36 as well as their positions on the print surface 12. The result of this calculation is then stored in the memory 44.

Note that in a preferred embodiment the data that specifies the shape of the object 30 is stored in a memory in separate workstation. The separate workstation will use its internal processor to calculate, from the shape data, the three-dimensional model of the jigs 36.

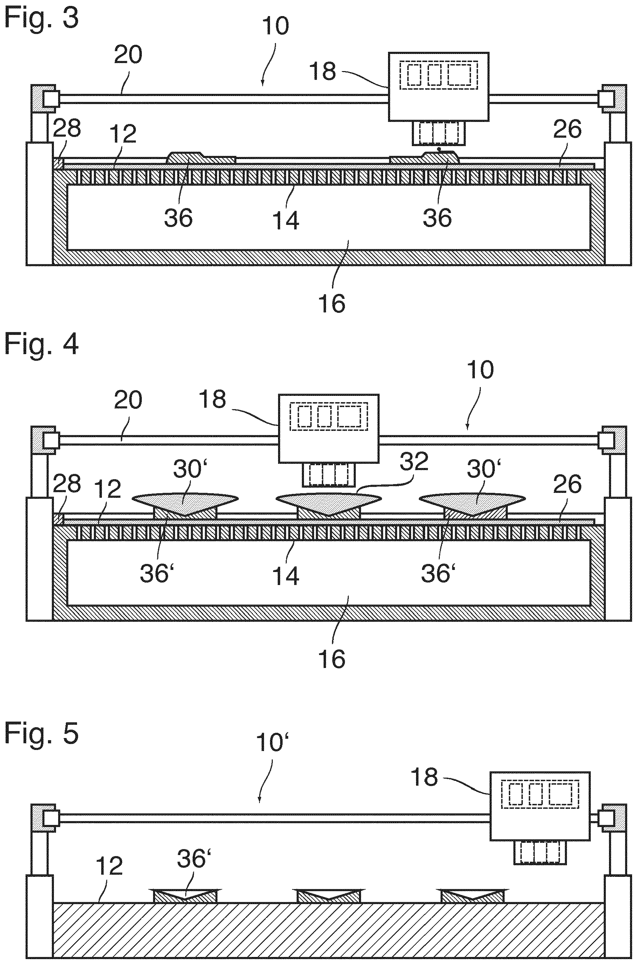

Further, in order to prepare the printer for printing on the image receiving surface of the object 30, the substrate 26 is placed on the print surface, and the printer is started for printing the jigs 36 onto the substrate 26 on the basis of the data stored in the memory 44. This process has been illustrated in Fig. 3, where the topmost layers of the jigs 36 have not been completed jet.

When the jigs have finally been completed, the vacuum in the suction chamber 16 is maintained so as to securely hold the substrate 26 in position, the object 30 is placed over the jigs as shown in Fig. 1, and the printer is started again for now printing the image on the image receiving surface 32.

When the image has been printed, the object 30 may be removed from the substrate 26 and the jigs 36 while the substrate and the jigs remain in position. Then, when more objects 30 of the same type need to be decorated, they may be placed onto the jigs 36 in the same manner, and the image printing process may be repeated.

When the printer 10 has to be reconfigured for printing onto a different type of objects, the substrate 26 with the jigs 36 adhering thereto is removed, the three-dimensional data for the new object are loaded into the memory 42, a new substrate sheet is placed onto the print surface, and the printer is started for printing suitable jigs for the new object.

Optionally, the substrate 26 with the jigs 36 formed thereon may be stored and may be used again when objects of the same type are to be processed. In that case, the alignment ledgers 28 will help to correctly align the substrate 26 and the jigs on the print surface.

Fig. 4 illustrates an example where objects 30' of a different type are to be processed on the same printer 10. In this example, the objects 30' are cone- or pyramid-shaped bodies, and the image receiving surface 32 is the base surface of the pyramid or cone. As illustrated in this example, the image receiving surface 32 needs not to be perfectly flat but may also be gently curved, as long as the height differences are not significantly larger than the gap between the print heads and the object. Further, in this example, a plurality of jigs 36' have been printed onto the substrate 26 so as to process a plurality of objects 30' in a single print process for enhanced efficiency. The jigs 36' have been printed in a shape complementary to the tip of the pyramid or cone, so that the image receiving surfaces 32 are held in the correct posture. The height of the carriage 18 over the print surface 12 is automatically adapted on the basis of the known geometries of the jigs 36' and the objects 30'.

The objects 30' may also have different shapes, as long as their image receiving surfaces (32) are level with one another.

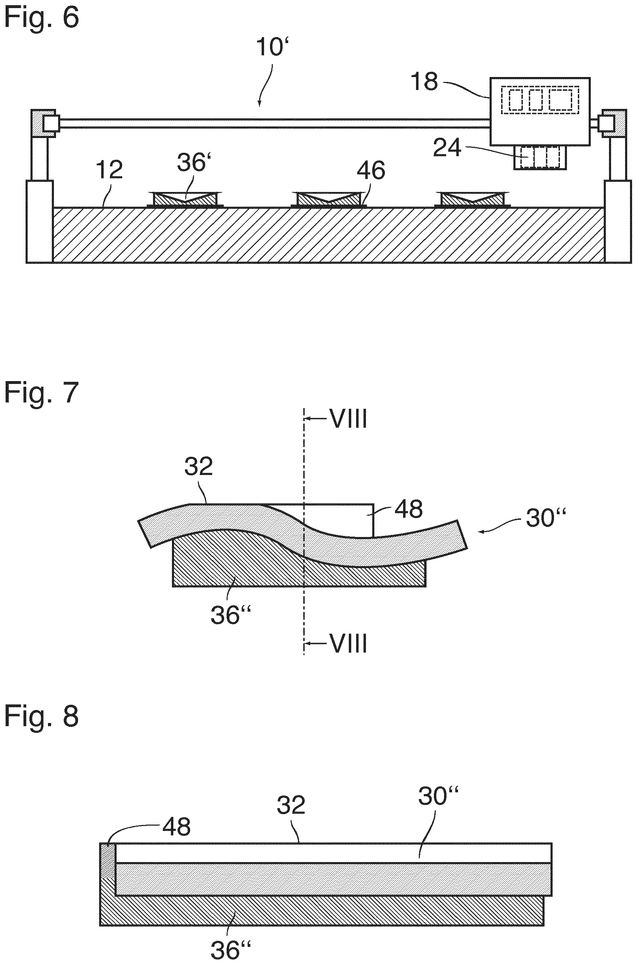

Fig. 5 illustrates a modified embodiment utilizing a printer 10' of a different type. This printer does not have a suction chamber with a suction plate for fixing the print substrates, and the print surface 12 is simply formed by a plate. In this embodiment, jigs such as the jigs 36' are formed by printing directly on the print surface 12 so that the jigs will adhere to the print surface. In the condition shown in Fig. 6, the objects 30' have not yet been inserted, so that the cavities for accommodating the tips of the cones are visible.

The ink that has been used for forming the jigs 36' has a consistency that assures on the one hand that the jigs will adhere to the print surface 12 with sufficient strength when the ink has cured, but on the other hand the jigs can still be removed from the print surface 12 without substantial effort and without leaving any residues on the print surface. Thus, when the printer 10 has to be reconfigured for a different type of objects, the jigs 36 can easily be removed and new jigs can be printed.

Fig. 6 illustrates a variant in which the printer 10' is first used for printing primer layers 46 onto the print surface 12 in those positions where the jigs 36' are to be formed. The jigs 36' are then printed on top of the primer layers 46. When the jigs are to be removed again, the primer layers 46 assure that the jigs can easily be separated from the print surface. It will be understood that, in this embodiment, one of the print heads 24 will be dedicated for printing the primer layers.

Fig. 7 is a cross-sectional view of an object 30" which is constituted by a profile member having curved top and bottom surfaces, except for a flat image receiving surface 32 on the top side. A corresponding jig 36" has been printed in a shape complementary to the bottom side of the object 30". However, as is shown in a longitudinal section in Fig. 8, a reference lug 48 is formed at one end of the jig 36", so that the object 30" may be placed onto the jig such that one end thereof abuts the reference lug 48 for precisely defining the position of the object in lengthwise direction of the profile, thus assuring that an image can be printed, for example, right in the center of the image receiving surface 32.

Note that it is not strictly necessary for the shape of the jig to be complementary to the bottom side of the object to print on. It is sufficient if the jig is shaped such that the object to print on is stably held in a known position and posture. Furthermore, the jig may be comprised of more than one part. For example, the smartphone cover in Fig. 1 may be held stably in a known position and posture by four distinct parts that form corners that engage with the sides of the four corners of the smartphone cover.

## Claims

1. A method of printing on a surface (32) of a three-dimensional object (30; 30'; 30") with a printer (10; 10') having a print surface (12) and a print head (24), wherein a jig (36; 36'; 36") is used for positioning the object on the print surface (12) in a position in which the surface (32) to be printed on faces the print head (24), **characterized by** the steps of:
- providing a three-dimensional digital model of the jig (36; 36'; 36");
- using the printer (10; 10') for printing the jig on the print surface (12); and
- placing the object (30; 30'; 30") against the jig (36; 36'; 36") wherein a sheet-like substrate (26) is placed on the print surface (12) and held in position thereon, and the jig (36) is printed onto the substrate (26) such that is adheres to the substrate.

2. The method according to claim 1, wherein the jig (36; 36'; 36") is kept in an unchanged position relative to the print surface (12) during the time after the jigs have been printed and before the object is placed thereon.

3. The method according to claim 1 or 2, wherein the printer (10; 10') is an ink jet printer.

4. The method according to any of the preceding claims, wherein the three-dimensional model of the jig is calculated from a three-dimensional model of the object.

5. The method according to claim 1, wherein the print surface (12) is formed by a suction plate (14) arranged to suck the substrate (26) against the print surface by vacuum pressure.

6. The method according to any of the preceding claims, comprising printing a plurality of jigs (36') arranged for positioning a plurality of objects (30') on the print surface (12), the jigs (36') being shaped such that image receiving surfaces (32) of the plurality of objects (30') are level with one another.

7. The method according to any of the preceding claims, wherein the jig (36") is printed in a shape having at least one reference lug (48) serving as an abutment for defining the position of the object (30") in at least one direction in parallel with the plane of the print surface (12).

8. The method according to any of claims 4-7, further comprising the step of printing an image on the image receiving surface (32) of the object (30, 30', 30"), wherein the height of the print head (24) is adjusted by automatically determining the height of the image receiving surface (32) relative to the print surface (12) based on the three-dimensional model of the object (30; 30'; 30") and, if relevant, the three-dimensional digital model of the jig (36; 36'; 36").

## Patentansprüche

1. Verfahren zum Drucken auf eine Oberfläche (32) eines dreidimensionalen Objekts (30; 30'; 30") mit einem Drucker (10; 10'), der eine Druckfläche (12) und einen Druckkopf (24) aufweist, wobei eine Schablone (36; 36'; 36") dazu verwendet wird, das Objekt auf der Druckfläche (12) in einer Position zu halten, in der die zu bedruckende Oberfläche (32) dem Druckkopf (24) zugewandt ist, **gekennzeichnet durch** die folgenden Schritte:
- bereitstellen eines dreidimensionalen digitalen Modells der Schablone (36; 36'; 36");
- verwenden des Druckers (10; 10') zum Drucken der Schablone auf die Druckfläche (12); und
- platzieren des Objekts (30; 30'; 30") an der Schablone, wobei
ein blattförmiges Substrat (26) auf die Druckfläche (12) aufgelegt und darauf in Position gehalten wird und die Schablone (36) so auf das Substrat (26) gedruckt wird, dass sie an dem Substrat haftet.

2. Verfahren nach Anspruch 1, bei dem die Schablone (36; 36'; 36") während der Zeit nach dem Drucken der Schablonen und vor dem Anordnen des Objekts darauf in einer unveränderten Position relativ zu der Druckfläche (12) gehalten wird.

3. Verfahren nach Anspruch 1 oder 2, bei dem der Drucker (10; 10') ein Tintenstrahldrucker ist.

4. Verfahren nach einem der vorstehenden Ansprüche, bei dem das dreidimensionale Modell der Schablone anhand eines dreidimensionalen Modells des Objekts berechnet wird.

5. Verfahren nach Anspruch 1, bei dem die Druckfläche (12) durch eine Saugplatte (14) gebildet wird, die dazu ausgebildet ist, das Substrat (26) durch Unterdruck gegen die Druckfläche anzusaugen.

6. Verfahren nach einem der vorstehenden Ansprüche, mit Drucken einer Vielzahl von Schablonen (36'), die dazu ausgebildet sind, eine Vielzahl von Objekten (30') auf der Druckfläche (12) zu positionieren, wobei die Schablonen (36') so geformt sind, dass Bildempfangs-Oberflächen (32) der Vielzahl der Objekte (30') miteinander niveaugleich sind.

7. Verfahren nach einem der vorstehenden Ansprüche, bei dem die Schablone (36') in einer Form gedruckt wird, die wenigstens einen Referenzvorsprung (48) aufweist, der als ein Anschlag zum Definieren der Position des Objekts (30") in wenigstens einer Richtung parallel zu der Ebene der Druckfläche (12) dient.

8. Verfahren nach einem der Ansprüche 4-7, mit dem weiteren Schritt des Druckens eines Bildes auf die Bildempfangs-Oberfläche (32) des Objekts (30, 30', 30"), wobei die Höhe des Druckkopfes (24) eingestellt wird durch automatisches Bestimmen der Höhe der Bildempfangs-Oberfläche (32) relativ zu der Druckfläche (12) auf der Grundlage des dreidimensionalen Modells des Objekts (30; 30'; 30") und, sofern relevant, des dreidimensionalen digitalen Modells der Schablone (36; 36'; 36").

## Revendications

1. Procédé d'impression sur une surface (32) d'un objet tridimensionnel (30; 30' ; 30") avec une imprimante (10 ; 10') ayant une surface d'impression (12) et une tête d'impression (24), dans lequel un gabarit (36 ; 36' ; 36") est utilisé pour positionner l'objet sur la surface d'impression (12) dans une position dans laquelle la surface (32) sur laquelle imprimer fait face à la tête d'impression (24), **caractérisé par** les étapes consistant à :
- fournir un modèle numérique tridimensionnel du gabarit (36 ; 36' ; 36") ;
- utiliser l'imprimante (10; 10') pour imprimer le gabarit sur la surface d'impression (12) ; et
- placer l'objet (30 ; 30' ; 30") contre le gabarit (36 ; 36' ; 36")
dans lequel
un substrat de type feuille (26) est placé sur la surface d'impression (12) et maintenu en position sur celle-ci, et le gabarit (36) est imprimé sur le substrat (26) de sorte qu'il adhère au substrat.

2. Procédé selon la revendication 1, dans lequel le gabarit (36 ; 36' ; 36") est gardé dans une position inchangée par rapport à la surface d'impression (12) pendant le temps après que les gabarits ont été imprimés et avant que l'objet soit placé sur celle-ci.

3. Procédé selon la revendication 1 ou 2, dans lequel l'imprimante (10; 10') est une imprimante à jet d'encre.

4. Procédé selon l'une quelconque des revendications précédentes, dans lequel le modèle tridimensionnel du gabarit est calculé à partir d'un modèle tridimensionnel de l'objet.

5. Procédé selon la revendication 1, dans lequel la surface d'impression (12) est formée par une plaque à aspiration (14) agencée pour aspirer le substrat (26) contre la surface d'impression par pression à vide.

6. Procédé selon l'une quelconque des revendications précédentes, comprenant l'impression d'une pluralité de gabarits (36') agencés pour positionner une pluralité d'objets (30') sur la surface d'impression (12), les gabarits (36') étant formés de sorte que des surfaces de réception d'image (32) de la pluralité d'objets (30') soient au même niveau les unes avec les autres.

7. Procédé selon l'une quelconque des revendications précédentes, dans lequel le gabarit (36") est imprimé sous une forme ayant au moins une patte de référence (48) servant de butée pour définir la position de l'objet (30") dans au moins une direction en parallèle avec le plan de la surface d'impression (12).

8. Procédé selon l'une quelconque des revendications 4 à 7, comprenant en outre l'étape consistant à imprimer une image sur la surface de réception d'image (32) de l'objet (30, 30', 30"), dans lequel la hauteur de la tête d'impression (24) est ajustée en déterminant automatiquement la hauteur de la surface de réception d'image (32) par rapport à la surface d'impression (12) sur la base du modèle tridimensionnel de l'objet (30 ; 30' ; 30") et, si cela est pertinent, du modèle numérique tridimensionnel du gabarit (36; 36' ; 36").
